(19) Europäisches Patentamt
European Patent Office
Office européen des brevets

(11) **EP 2 144 360 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
***H02M 7/219*** *(2006.01)*

(21) Anmeldenummer: **08012314.4**

(22) Anmeldetag: **08.07.2008**

(54) **Verfahren zum Betrieb eines Stromrichters und korrespondierende Vorrichtung**

Method for operating a converter and corresponding device

Procédé de fonctionnement d'un convertisseur de courant et dispositif correspondant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**13.01.2010 Patentblatt 2010/02**

(73) Patentinhaber: **Siemens Aktiengesellschaft**
**80333 München (DE)**

(72) Erfinder:
• **Becker, Frank**
**76135 Karlsruhe (DE)**
• **Benesch, Norbert, Dr.**
**90562 Heroldsberg (DE)**

(56) Entgegenhaltungen:
**DE-A1-102005 012 150    JP-A- 2006 025 587**

• **BECKER F., SCHERER A., WEIGOLD J., BRAUN M.: "a simple indirect voltage sensing method for line-connected inverters" POWER ELECTRONICS AND APPLICATIONS, 2007 EUROPEAN CONFERENCE ON, 2. September 2007 (2007-09-02), - 5. September 2007 (2007-09-05) Seiten 1-7, XP002511547 ISBN: 978-92-75815-10-8 Gefunden im Internet: URL:ieeexplore.ieee.org>**
• **BECKER F ET AL: "a simple indirect voltage sensing method for line-connected inverters", 2007 EUROPEAN CONFERENCE ON POWER ELECTRONICS AND APPLICATIONS ; 2 - 5 SEPTEMBER 2007; AALBORG, DENMARK, IEEE SERVICE CENTER, PISCATAWAY, NJ, 2 September 2007 (2007-09-02), pages 1-7, XP002511547, DOI: 10.1109/EPE.2007.4417462 ISBN: 978-90-75815-11-5 [retrieved on 2007-09-02]**

EP 2 144 360 B1

**Beschreibung**

Die vorliegende Erfindung betrifft ein Verfahren zum Betrieb eines grundfrequent getakteten, netzseitigen Stromrichters mit einer mit steuerbaren Halbleiterschaltern bestückten Brückenschaltung sowie eine zur Ausführung des Verfahrens vorgesehene Vorrichtung, also ein Stromrichtergerät mit einem derartigen Stromrichter und einer derartigen Brückenschaltung.

Stromrichter und Verfahren zu deren Betrieb sind an sich bekannt. So zeigt ein von Frank Becker et al. auf der 2007 European Conference on Power Electronics and Applications in Aalborg, Dänemark vorgestelltes Paper ein Verfahren mit dem Titel "A simple indirect voltage sensing method for lineconnected inverters" (IEEE SERVICE CENTER, PISCATAWAY, NJ, 2. September 2007, Seiten 1-7, XP002511547, DOI: 10.1109/EPE.2007.4417462, ISBN: 978-90-7581 5-1 1-5). Das Verfahren offenbart eine Regelung für einen Stromrichter zum Betrieb einer dreiphasigen Drehstrommaschine, welche sowohl elektrische Energie aus dem Netz beziehen wie auch zurückspeisen kann. Der Stromrichter weist zwei selbstgeführte Sechspuls-Brückenschaltungen (eine netzseitige und eine maschinenseitige) sowie einen Gleichspannungszwischenkreis auf. Für eine Synchronisierung der netzseitigen Sechspuls-Brückenschaltungen mit dem Netz wird dabei üblicherweise die netzseitige Spannung ermittelt, wobei Spanungssensoren zum Einsatz kommen. Das vorgestellte Verfahren zeigt nun, dass für die Synchronisierung der netzseitigen Sechspuls-Brückenschaltungen mit dem Netz auf die herkömmliche Messung der Phasenspannungen am Netz und somit auf die Spannungssensoren verzichtet werden kann. Dazu wird in den einzelnen Netzphasen ein Stromfluss ermittelt, während sich die Leistungshalbleiter der Sechspuls-Brückenschaltungen in einem für selbstgeführte Inverter üblichen Freilauf-Zustand (Raumzeiger Null) einer pulsbreitenmodulierten Ansteuerung befinden.

Weiterhin wird zum Stand der Technik auch auf die DE 10 2005 012 150 A1 und die DE 10 2006 015 031 A1 verwiesen. Ein Stromrichtergerät oder eine Stromrichterschaltung umfasst zumindest einen Netzanschluss und als Netzanschluss dafür vorgesehene, als Strompfade fungierende Stränge, beim Anschluss an ein Dreiphasennetz also drei Stränge, sodann den eigentlichen Stromrichter mit der die Stromrichtungsfunktionalität implementierenden Brückenschaltung und am Ausgang des Stromrichters einen Zwischenkreis, wobei ein erster Ausgang des Stromrichters einen ersten Zwischenkreiskontakt und ein zweiter Ausgang des Stromrichters einen zweiten Zwischenkreiskontakt bilden. Zwischen diesen beiden Zwischenkreiskontakten liegt im Betrieb eine Zwischenkreisspannung an, die sich aufgrund der Stromrichtung als Gleichspannung ergibt. Zur Pufferung und Glättung der Zwischenkreisspannung ist üblicherweise zwischen den Zwischenkreiskontakten eine Zwischenkreiskapazität angeordnet.

Bei einem im Betrieb sich ergebenden positiven Leistungsfluss in den Zwischenkreis arbeitet der Stromrichter näherungsweise wie eine so genannte B6-Diodenbrücke, da nur die von dem Stromrichter umfassten Dioden den Strom führen und jeweils antiparallel dazu als Halbleiterschalter angeordnete Transistoren stromlos sind. Umgekehrt liegen bei Leistungsfluss aus dem Zwischenkreis in das Netz die Dioden in Sperrrichtung und dem Strom wird durch entsprechende Aktivierung einzelner Transistoren zu jedem Zeitpunkt genau ein Pfad in das Netz ermöglicht. Eine bevorzugte Schaltung für die den Stromrichter bildende Brückenschaltung ist eine so genannte IGBT-B6-Brücke (Insulated-Gate-Bipolar-Transistor), die eine passive parallele Dioden-Brücke beinhaltet, die einen rein passiven Betrieb in eine Leistungsrichtung, also z. B. für den Leistungsfluss in den Zwischenkreis, und einen aktiven Ein-/Rückspeise-Leistungsfluss, also entsprechend z. B. aus dem Zwischenkreis in das Netz, ermöglicht. Schaltflanken zur Ansteuerung der im Folgenden allgemein als Halbleiterschalter bezeichneten Transistoren liegen im grundfrequenten Betrieb bei so genannten natürlichen Zündzeitpunkten, also Schnittpunkten der Netzspannungen, die der Schaltung oder dem Gerät über die einzelnen Strompfade zugeführt werden, bei einem Dreiphasennetz, also die einzelnen, im Folgenden mit R, S, T bezeichneten Leitungen des Drehstromnetzes mit den darüber zugeführten Netzspannungen $U_R$, $U_S$ und $U_T$.

Der grundfrequent getaktete Betrieb von Stromrichtern zeichnet sich durch einige Vorteile aus, die den Einsatz sinnvoll machen. Da kein hochfrequentes Takten der auch als Stromventile bezeichenbaren Halbleiterschalter erfolgt, ergeben sich beispielsweise geringe Schaltverluste und weiter die Möglichkeit einer Verwendung einfacher und kostengünstiger Kommutierungsdrosseln und Netzfilter sowie schließlich eine geringe Anregung von Systemschwingungen, die z. B. zu hohen Motorlagerströmen führen können. Schließlich ist der Betrieb derartiger Stromrichter im Allgemeinen robust gegenüber Netzstörungen, Netzunsymmetrien und dergleichen.

Aufgrund der genannten Eigenschaften eignen sich grundfrequent getaktete Stromrichter insbesondere in Anwendungsbereichen, bei denen kostengünstige Lösungen gesucht sind und hoher Kostendruck herrscht. Daher besteht besonderer Bedarf an Maßnahmen zur Kostensenkung. In dieser Hinsicht sind Änderungen an Aufbau oder Schaltung besonders effektiv, da diese in der Produktion für jedes Einzelgerät wirksam werden und dadurch in Summe große Einsparungen ermöglichen.

Wie bereits beschrieben, liegen die Schaltflanken der Halbleiterschalter im grundfrequenten Betrieb bei den durch die Schnittpunkte der Netzspannungen definierten natürlichen Zündzeitpunkten. Für die richtige Ansteuerung der Halbleiterschalter ist also die Kenntnis der Netzphasenlage erforderlich. Dazu sind nach dem Stand der Technik bisher vergleichsweise aufwendige Messverfahren vorgeschlagen worden, z. B. eine Auswertung einer Leiter-Leiter-Spannung im Stromrichter oder eine Erfassung des Zeitpunktes eines Vorzeichenwechsels dieser Spannungen mit Hilfe einer Komparatorschaltung. Die für derartige Messungen benötigen Messeinrichtungen sind weder für die eigentliche Umrichterfunktion noch für den Schutz des Umrichters erforderlich und könnten insofern entfallen, wenn es gelänge, eine andere Lösung zur Bestimmung der Netzphasenlage zu implementieren.

Eine Aufgabe der vorliegenden Erfindung besteht daher darin, für grundfrequent getaktete Ein-/Rückspeisungen ein neues Verfahren zur Ermittlung der Netzphasenlage anzugeben, bei dem insbesondere der Schaltungsaufwand für eine messtechnische Erfassung minimiert sein soll, insbesondere entfallen soll, während Messgrößen, speziell auf die Phasenströme bezogene Messgrößen, die auch zum Geräteschutz benötigt werden, verwendet werden sollen.

Diese Aufgabe wird mit einem Verfahren zum Betrieb eines Stromrichters mit den Merkmalen des Anspruchs 1 gelöst. Dazu ist bei einem grundfrequent getakteten netzseitigen Stromrichter mit einer mit steuerbaren Halbleiterschaltern, nämlich unteren und oberen Halbleiterschaltern, bestückten Brückenschaltung, bei dem vor oder nach sich aufgrund eines Netzwinkels ergebender natürlicher Zündzeitpunkte zumindest zwei obere oder untere Halbleiterschalter gleichzeitig aktiv sind, vorgesehen, dass während der gleichzeitigen Aktivität zumindest zweier oberer oder unterer Halbleiterschalter zumindest zwei Messungen durchgeführt werden, deren Ergebnis zur Nachführung eines geschätzten Netzwinkels zur Taktung, also zur Aktivierung der Halbleiterschalter verwendet wird. Die Bezeichnung einzelner Halbleiterschalter der Brückenschaltung als obere oder untere Halbleiterschalter wird im Wesentlichen zur Unterscheidung eingeführt. Die oberen Halbleiterschalter, bei einem Dreiphasennetz drei obere Halbleiterschalter, sind mit einem ersten Zwischenkreiskontakt und die unteren Halbleiterschalter, bei einem Dreiphasennetz entsprechend drei untere Halbleiterschalter, sind mit einem zweiten Zwischenkreiskontakt verbunden, wobei erster und zweiter Zwischenkreiskontakt im Betrieb des Stromrichters auf einem ersten bzw. zweiten Zwischenkreispotential liegen. Die gleichzeitige Aktivität mindestens zweier oberer oder unterer Halbleiterschalter ergibt sich während einer nicht notwendig unterbrechungsfreien Zeitspanne vorgegebener oder vorgebbarer Dauer und zwar vor und/oder nach solchen Zeitpunkten, die den sich aufgrund eines Netzwinkels ergebenden natürlichen Zündzeitpunkten der Halbleiterschalter im grundfrequenten Betrieb entsprechen.

Die gleichzeitige Aktivierung mindestens zweier Halbleiterschalter bedeutet, dass neben dem aufgrund der grundfrequenten Taktung normalerweise aktiven Halbleiterschalter zumindest ein weiterer Halbleiterschalter aktiviert ist. Der Vorteil der Erfindung besteht darin, dass durch die gleichzeitige Aktivierung zweier oberer oder unterer Halbleiterschalter der Brückenschaltung und in Verbindung mit den antiparallelen Dioden sich elektrisch eine Masche und damit ein geschlossener Stromkreis ergibt. In Bezug auf diesen Stromkreis können Messungen, insbesondere Strommessungen, durchgeführt werden, deren Ergebnis zur Nachführung des Netzwinkels verwendbar ist.

Vorteilhafte Ausgestaltungen der Erfindung sind Gegenstand der Unteransprüche. Dabei verwendete Rückbeziehungen weisen auf die weitere Ausbildung des Gegenstandes des oder der unabhängigen Ansprüche durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die gleichzeitig aktivierten oberen oder unteren Halbleiterschalter diejenigen Halbleiterschalter sind, zwischen denen im grundfrequenten Betrieb eine Umschaltung erfolgt, ergibt sich vorteilhaft, dass im Bereich einer Sektorgrenze für die Umschaltung im grundfrequenten Betrieb diejenige Leiter-Leiter-Spannung klein ist, zwischen deren Phasen umgeschaltet werden soll; bei einem Dreiphasennetz ist die Spannung der jeweiligen dritten Phase dann im Bereich ihres Maximums und ändert sich nur relativ langsam. Für die Ermittlung der Phasenlage, also zur Nachführung des geschätzten Netzwinkels, ist daher näherungsweise die alleinige Betrachtung der durch die gleichzeitige Aktivierung der oberen oder unteren Halbleiterschalter kurzgeschlossenen Masche ausreichend.

Wenn neben zwei zumindest kurzzeitig gleichzeitig aktivierten oberen Halbleiterschaltern dauerhaft ein unterer Halbleiterschalter und neben zwei zumindest kurzzeitig gleichzeitig oberen Halbleiterschaltern dauerhaft ein oberer Halbleiterschalter aktiv ist, wird durch die Messungen zur Nachführung des geschätzten Netzwinkels der grundfrequente Betrieb des Stromrichters nicht beeinträchtigt.

Zur Erleichterung der weiteren Beschreibung der Erfindung wird diese auf Basis einer Terminologie, nachdem der Stromrichter an netzseitige Stränge angeschlossen ist, und zwar jeder Strang an einen Mittelabgriff zwischen jeweils einem oberen und einem unteren Halbleiterschalter, fortgesetzt. Mit dieser Definition kann dann gesagt werden, dass die Nachführung des geschätzten Netzwinkels in einer bevorzugten Ausführungsform in Ansehung einer Gesamtspannung in den über die gleichzeitig aktivierten Halbleiterschalter verbundenen Strängen erfolgt. Über die jeweils gleichzeitig angesteuerten Halbleiterschalter werden also die damit jeweils verbundenen Stränge zu einer Masche zusammengeschlossen und in dieser ergibt sich als Gesamtspannung die Summe einer Leiter-Leiter-Spannung zwischen den beiden vermaschten Strängen zuzüglich der entlang des jeweiligen Strangs abfallenden Spannung, also z. B. die über die von dem Strang umfasste Kommutierungsdrossel abfallende Spannung. Wenn zu Gunsten einer einfachen Darstellung Sättigungseffekte, z. B. Sättigungseffekte der Kommutierungsdrossel(n), vernachlässigt werden, ist ein Scheitelwert der verketteten Netzspannungen anhand einer mittleren zwischen dem ersten und zweiten Zwischenkreiskontakt anliegenden Zwischenkreisspannung näherungsweise bekannt. Daraus lässt sich ein Schätzwert für die Anschlussspannung zum Zeitpunkt der durchzuführenden Messungen erhalten, wobei der aktuelle Schätzwert für die Netzfrequenz zugrunde gelegt wird. Damit lässt sich eine Abweichung vom Spannungsschätzwert ermitteln, die positiv oder negativ sein kann und ein Maß dafür ist, ob der Einschaltvorgang im Vergleich zur tatsächlichen Sektorgrenze, also im Vergleich zum realen Netzwinkel, zu früh oder zu spät lag. Dementsprechend kann diese Abweichung als Eingangswert für eine Phasenregelschleife (PLL) verwendet werden, um den Schätzwert für die Netzfrequenz zu erhöhen oder zu erniedrigen. Die Nachführung des geschätzten Netzwinkels kann also entweder linear mit einem anhand der Gesamtspannung gebildeten Korrekturwert erfolgen oder in diskreten Schritten anhand eines Vorzeichens der Gesamtspannung oder eines daraus gebildeten Korrekturwertes.

Die oben skizziert Aufgabe wird analog mit einem Stromrichtergerät gemäß Anspruch 6 gelöst. Dazu sind bei einem Stromrichtergerät mit einem grundfrequent getakteten netzseitigen Stromrichter wie oben beschrieben und mit Mitteln zur gleichzeitigen Aktivierung zweier oberer oder unterer Halbleiterschalter Mittel zur Durchführung zweier Messungen während der gleichzeitigen Aktivität zweier oberer oder unterer Halbleiterschalter und Mittel zur Ableitung einer Nachführung eines geschätzten Netzwinkels zur Taktung der Halbleiterschalter anhand der Messungen vorgesehen. Die gleichzeitige Aktivierung zweier oberer oder unterer Halbleiterschalter wird dabei während einer vorgegebenen oder vorgebbaren, nicht notwendig unterbrechungsfreien Zeitspanne vor und/oder nach sich aufgrund eines Netzwinkels ergebender natürlicher Zündzeitpunkte der Halbleiterschalter im grundfrequenten Betrieb ausgelöst. Der Vorteil einer derartigen Ausgestaltung des Stromrichtergerätes entspricht analog den oben beschriebenen Vorteilen für das erfindungsgemäße Verfahren. Insoweit wird auf die weiter oben bereits gegebenen Erläuterungen verwiesen.

Bei einer bevorzugten Ausführungsform des Stromrichtergerätes, wobei zur weiteren Beschreibung auf die oben ebenfalls bereits eingeführte Definition, nach der der Stromrichter an netzseitige Stränge angeschlossen ist und zwar jeder Strang an einen Mittelabgriff zwischen jeweils einem oberen und einem unteren Halbleiterschalter, ist vorgesehen, dass die Nachführung des geschätzten Netzwinkels in Ansehung einer Gesamtspannung in den über die gleichzeitig aktivierten Halbleiterschalter verbundenen Stränge erfolgt. Die gleichzeitig verbundenen Stränge bilden, wie oben ebenfalls mit Bezug auf das Verfahren und dessen Ausgestaltungen beschrieben, eine Masche und damit einen geschlossenen Stromkreis, in dem die Messungen zur Nachführung des geschätzten Netzwinkels durchgeführt werden.

Bevorzugt ist vorgesehen, dass für das oder die Mittel zur gleichzeitigen Aktivierung zweier oberer oder unterer Halbleiterschalter in einem Speicher als Testsignale eine auswählbare Mehrzahl von Mustern zur gleichzeitigen Aktivierung zweier oberer oder unterer Halbleiterschalter hinterlegt ist. Damit können für die gleichzeitige Aktivierung zweier unterer und oberer Halbleiterschalter unterschiedliche Signalformen zur Anwendung kommen, bei denen jedes Muster z. B. günstige Effekte für einzelne Betriebs- und Umgebungssituationen bewirkt.

Das weiter oben skizzierte und nachfolgend näher erläuterte Verfahren wird bevorzugt in Software und/oder Firmware (Microcode nach VHDL o.ä. in FPGA, ASIC oder dgl.) implementiert, so dass die Erfindung auch ein Computerprogramm mit durch einen Computer ausführbaren Programmcodeanweisungen bzw. Mikrocodeanweisungen betrifft. Insoweit betrifft die Erfindung dann auch ein Speichermedium mit einem durch einen Computer ausführbaren derartigen Computerprogramm sowie ein Stromrichtergerät, auf dem ein derartiges Computerprogramm geladen ist. Schließlich betrifft die Erfindung damit auch ein Stromrichtergerät mit einer Verarbeitungseinheit nach Art eines Prozessors oder dergleichen als Mittel zur gleichzeitigen Aktivierung zweier oberer oder unterer Halbleiterschaltung und als Mittel zur Durchführung zweier Messungen während der gleichzeitigen Aktivität zweier oberer oder unterer Halbleiterschalter sowie als Mittel zur Ableitung einer Nachführung eines geschätzten Netzwinkels zur Taktung der Halbleiterschalter anhand der Messungen, wobei auf der Verarbeitungseinheit ein Computerprogramm wie oben skizziert geladen ist und/oder wobei die Verarbeitungseinheit zur Ausführung eines derartigen Computerprogramms bestimmt und vorgesehen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1      einen Stromrichter mit einer Halbleiterschalter umfassenden Brückenschaltung an einem Dreiphasennetz,

FIG 2      eine Darstellung zur Erläuterung einer Steuerlogik der Halbleiterschalter,

FIG 3       ein Blockschaltbild für eine modellgestützte Bestimmung des Netzphasenwinkels,

FIG 4       Ansteuersignale zur Aktivierung der Halbleiterschalter entsprechend einer grundfrequenten Taktung,

FIG 5       eine Momentaufnahme bei der Ansteuerung zweier Halbleiterschalter gemäß dem Ansatz der Erfindung,

FIG 6       ein Ersatzschaltbild der Brückenschaltung entsprechend einer momentanen Aktivierung einzelner Halbleiterschalter und einen sich damit ergebenden Stromkreis mit einer Masche,

FIG 7 und FIG 8       Darstellungen von Messwerten bei einer exakten Netzsynchronisation bzw. einer zu frühen Kommutierung,

FIG 9 bis FIG 14       schematisch vereinfachte Darstellungen von Testsignalen für Messungen in der sich aufgrund einer momentanen Aktivierung einzelner Halbleiterschalter ergebenden Masche zur Ableitung einer Nachführung eines geschätzten Netzwinkels zur Taktung der Halbleiterschalter.

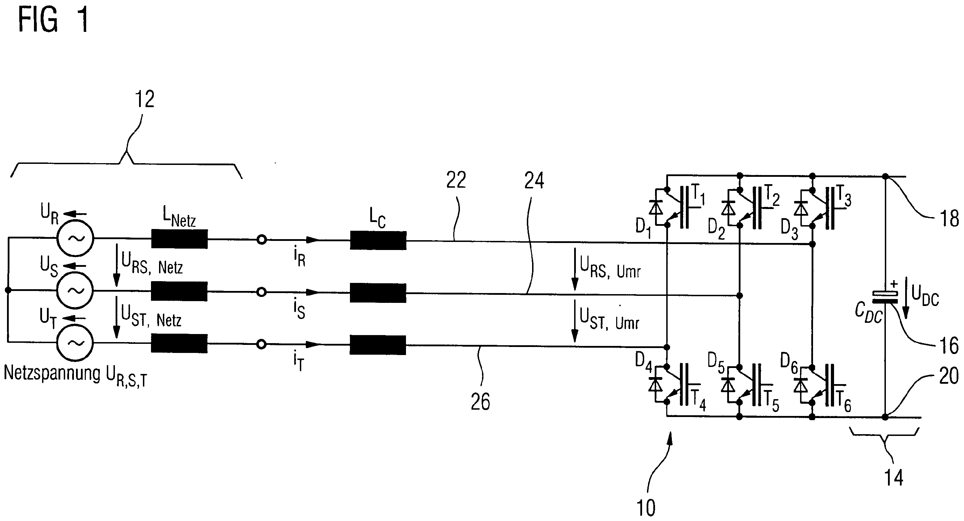

FIG 1 zeigt schematisch vereinfacht den Anschluss und den Aufbau eines Stromrichters 10 an einem Dreiphasennetz 12, wobei der Stromrichter 10 eine mit steuerbaren Halbleiterschaltern T1, T2, T3, T4, T5, T6 und antiparallelen Dioden D1, D2, D3, D4, D5, D6 bestückte Brückenschaltung, insbesondere in einer Ausführung als IGBT-B6-Brücke, umfasst.

Dem Stromrichter 10 ist an dessen Ausgang ein Zwischenkreis 14 nachgeordnet, der eine Zwischenkreiskapazität 16 umfasst, über der im Betrieb eine Zwischenkreisspannung $u_{DC}$ abfällt. Die Zwischenkreiskapazität 16 wird entsprechend üblicher Schaltungselementbezeichnungen auch als $C_{DC}$ bezeichnet. Von dem Stromrichter 10 sind eine Anzahl oberer Halbleiterschalter T1-T3, im dargestellten Fall genau drei obere Halbleiterschalter T1-T3, mit einem im Betrieb des Stromrichters 10 auf einem ersten Zwischenkreispotential liegenden ersten Zwischenkreiskontakt 18 verbunden. Entsprechend sind eine Anzahl unterer Halbleiterschalter T4-T6, im dargestellten Fall genau drei untere Halbleiterschalter T4-T6, mit einem im Betrieb des Stromrichters 10 auf einem zweiten Zwischenkreispotential liegenden zweiten Zwischenkreiskontakt 20 verbunden. Zwischen dem ersten und dem zweiten Zwischenkreiskontakt 18, 20 ist der Zwischenkreiskondensator 16 angeschlossen und die Potentialdifferenz zwischen den an diesen Kontakten 18, 20 anliegenden Potentialen entspricht der Zwischenkreisspannung $u_{DC}$.

Eingangsseitig ist der Stromrichter 10 mit dem Netz 12 verbunden, und zwar über netzseitige Stränge 22, 24, 26 und zwar derart, dass jeder Strang 22-26 an einen Mittelabgriff zwischen jeweils einem oberen und einem unteren Halbleiterschalter T1-T6 angeschlossen ist. Jeder Strang 22-26 umfasst eine Kommutierungsdrossel $L_C$ und in jedem Strang 22-26 fließt ein durch die Netzspannungen $u_R$, $u_S$, $u_T$ bestimmter Strom $i_R$, $i_S$, $i_T$. Für das speisende Netz 12 ist für jede Phase R, S, T jeweils eine Netzinduktivität $L_{Netz}$ gezeigt.

Schaltflanken zur Ansteuerung der Halbleiterschalter T1-T6 liegen für einen grundfrequenten Betrieb bei so genannten natürlichen Zündzeitpunkten, nämlich den Schnittpunkten der sinusförmigen Netzspannungen $u_R$, $u_S$, $u_T$ oder den Nulldurchgängen der Leiter-Leiter-Spannungen $u_{RS}$, $u_{ST}$ und $u_{TR}$.

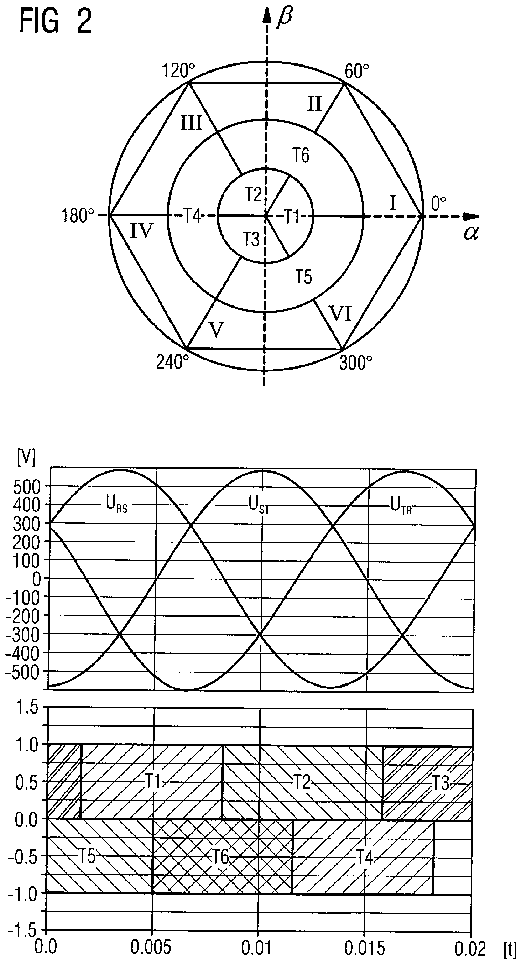

In FIG 2 ist dazu schematisch vereinfacht zur Erläuterung einer Steuerlogik der Halbleiterschalter T1-T6 im grundfrequenten Betrieb eine Netzperiode von 0°-360° dargestellt, wobei die Darstellung auf der linken Seite von FIG 2 im Folgenden als Sektordiagramm bezeichnet wird und bei darin eingezeichneten Sektorgrenzen (bei 0°, 60,° 120°, 180°, 240°, 300°) jeweils eine Umschaltung (Kommutierung) zwischen zwei Halbleiterschaltern T1-T6 stattfindet, bei der Sektorgrenze bei 0° z.B. zwischen den mit T5 und T6 bezeichneten Halbleiterschaltern. Bei positivem Leistungsfluss in dem Zwischenkreis 14 arbeitet der Stromrichter 10 näherungsweise wie eine B6-Dioden-Brücke, da die Dioden D1-D6 den Strom führen und die jeweils antiparallel dazu angeordneten Halbleiterschalter T1-T6 stromlos sind. Bei Leistungsfluss aus dem Zwischenkreis 14 in das Netz 12 liegen die Dioden D1-D6 in Sperrrichtung und dem Strom wird zu jedem Zeitpunkt genau ein Pfad über jeweils aktive Halbleiterschalter T1-T6 in das Netz 12 ermöglicht.

Diese skizzierte Betriebsart (Leistungsfluss in oder aus dem Zwischenkreis 14) zeichnet sich durch einige Vorteile aus, die den Einsatz eines solchen Stromrichters 10 sinnvoll machen. Da kein hochfrequentes Takten der als Stromventile fungierenden Halbleiterschalter T1-T6 erfolgt, resultieren z. B. geringere Schaltverluste, einfache und kostengünstige Kommutierungsdrosseln $L_C$ und Netzfilter sowie geringere Anregung von Systemschwingungen, die z. B. zu hohen Motorlagerströmen führen können und schließlich ein robuster Betrieb bei Netzstörungen, Netzunsymmetrien und dergleichen. Aufgrund der genannten Eigenschaften eigenen sich derartige grundfrequent getaktete Stromrichter 10 speziell für Anwendungsfälle, wo kostengünstige Lösungen gesucht sind und hoher Kostendruck herrscht. Daher besteht hier besonderer Bedarf an Maßnahmen zur Kostensenkung. Effektiv sind entsprechende Änderungen an Aufbau oder Schaltung, da diese in der Produktion für jedes Einzelgerät wirksam werden und dadurch in Summe große Einsparungen ermöglichen.

Wie aus FIG 2 hervorgeht, ist für die richtige Ansteuerung der Halbleiterschalter T1-T6 die Kenntnis der Phasenlage des Netzes 12 (Netzphasenlage) erforderlich. Während die Netzphasenlage durch Messung auf der Basis zusätzlicher Messeinrichtungen ermittelt werden kann, wird gemäß der Erfindung ein Verfahren zur Bestimmung der Netzphasenlage und eine nach dem Verfahren arbeitende Vorrichtung vorgeschlagen, die neben Messeinrichtungen, die bereits für die eigentliche Umrichterfunktion oder den Umrichterschutz unerlässlich sind, keine weiteren, ausschließlich für die Bestimmung der Phasenlage vorgesehenen Messeinrichtungen umfasst.

Zur einfacheren mathematischen Beschreibung der Netzphasenlage eines dreiphasigen Systems wie in FIG 1 dargestellt (drei Stränge 22-26) werden die zeitlichen Augenblickswerte der Stranggrößen $x_1$, $x_2$, $x_3$ zu einem komplexen Raumzeiger **x**

$$\mathbf{x} = \frac{2}{3}\left(x_1 + \mathbf{a}\, x_2 + \mathbf{a}^2\, x_3\right) \quad mit \quad \mathbf{a} = e^{j\frac{2\pi}{3}}$$

zusammengefasst. Die Nullkomponente wird hier nicht betrachtet. Für die reellen kartesischen Koordinaten $x_\alpha$ und $x_\beta$ des Raumzeigers $\mathbf{x}_{\alpha\beta} = x_\alpha + j\, x_\beta$ gilt die Transformationsvorschrift

$$\begin{bmatrix} x_\alpha \\ x_\beta \end{bmatrix} = \frac{2}{3}\begin{bmatrix} 1 & -\frac{1}{2} & -\frac{1}{2} \\ 0 & \frac{\sqrt{3}}{2} & -\frac{\sqrt{3}}{2} \end{bmatrix} \cdot \begin{bmatrix} x_1 \\ x_2 \\ x_3 \end{bmatrix}.$$

Für den Spannungsraumzeiger erhält man

$$\begin{bmatrix} u_\alpha \\ u_\beta \end{bmatrix} = \frac{2}{3}\begin{bmatrix} 1 & -\frac{1}{2} & -\frac{1}{2} \\ 0 & \frac{\sqrt{3}}{2} & -\frac{\sqrt{3}}{2} \end{bmatrix} \cdot \begin{bmatrix} u_R \\ u_S \\ u_T \end{bmatrix} = \begin{bmatrix} \frac{2}{3} & \frac{1}{3} \\ 0 & \frac{1}{\sqrt{3}} \end{bmatrix} \cdot \begin{bmatrix} u_{RS} \\ u_{ST} \end{bmatrix} \quad mit \quad u_{RS} = u_R - u_S, \; u_{ST} = u_S - u_T.$$

Der Winkel dieses Spannungszeigers, also der Netzwinkel oder die Phasenlage, ist in Übereinstimmung mit FIG 2 definiert als

$$\phi = \arctan\left(\frac{u_\beta}{u_\alpha}\right).$$

Die Grundschwingung in der ersten Phase erreicht damit bei $\phi = 0$ gerade ihr Maximum.

Die Bestimmung der Netzphasenlage im Betrieb basiert bisher auf einer direkte Messung der Netzspannung, z.B. durch Messung von mindestens zwei Leiter-Leiter-Spannungen an den Umrichterklemmen, und erfordert insoweit einen A/D-Wandler, einen $\Sigma\Delta$-Wandler oder ähnliches oder durch Erfassung eines Vorzeichenwechsels der Leiter-Leiter-Spannungen mittels einer speziellen Komparatorschaltung oder durch Messung von mindestens zwei Leiter-Leiter-Spannungen auf der Netzseite der Kommutierungsdrossel, was wiederum z.B. ein separates Messmodul mit A/D-Wandler am Netzanschlusspunkt erfordert.

Bei einer direkten Messung der Spannungen lässt sich daraus durch geeignete Transformation direkt der aktuelle Netzwinkel berechnen. Dieser Momentanwert lässt sich als Eingangswert einer mit einem Schätzwert für den Netzwinkel arbeitenden PLL zuführen, um die Netzfrequenz oder einen PLL-Schätzwert des Netzwinkels nachzuführen. Werden z. B. nur die Nulldurchgänge der Netzspannungen erfasst, so ist der Netzwinkel jeweils genau zum Zeitpunkt eines Nulldurchgangs bekannt. Zwischen den Zeitpunkten der Spannungsnulldurchgänge kann der Netzwinkel einfach interpoliert werden. Der Interpolationswert wird als Eingangswert einer Netz-PLL verwendet (s.a. 2005E18911 DE), um einen gefilterten kontinuierlichen Schätzwert der Netzfrequenz zu erhalten.

Gemäß der Erfindung wird vorgeschlagen, die bisher erforderliche Einrichtung zur Erfassung der Netzspannung zu ersetzen durch eine Kombination aus

- einem zusätzlichen oder gegenüber dem Standard modifizierten Muster zur Ansteuerung der Halleiterschaler T1-T6, die kompatibel zur grundfrequenten Taktung sind, wobei während einer vorgegebenen oder vorgebbaren nicht notwendig unterbrechungsfreien Zeitspanne vor und/oder nach sich aufgrund eines Netzwinkels ergebenden natürlichen Zündzeitpunkten der Halbleiterschalter T1-T6 im grundfrequenten Betrieb zwei obere oder untere Halbleiterschalter T1-T3; T5-T6 gleichzeitig aktiviert sind
- Phasenstrommessungen von $i_R$, $i_S$, $i_T$ während der gleichzeitigen Aktivierung zweier unterer oder oberer Halbleiterschalter T1-T3; T4-T6 und
- einer Modellrechnung zur Bestimmung des Schätzfehlers als Abweichung zwischen dem momentanen Schätzwert für den Netzwinkel und dem tatsächlichen Netzwinkel.

Bei der normalen grundfrequenten Taktung nach FIG 2 sind zu jedem Zeitpunkt nur ein Transistor T1-T3 der oberen Brückenhälfte, also nur ein oberer Halbleiterschalter T1-T3, und ein Transistor T4-T6 der unteren Brückenhälfte, also nur ein unterer Halbleiterschalter T4-T6, aktiviert. Kennzeichnend für die hier vorgeschlagene, geänderten Steuerlogik ist demgegenüber, dass für kurze Zeiten zwei obere oder untere Halbleiterschalter T1-T3; T5-T6 aktiviert sind. Der aufgrund der Modellrechnung ermittelbare Schätzfehler kann schließlich als Eingangswert eines Frequenzschätzers (vorzugsweise einer PLL) zur Nachführung von Netzfrequenz und Phasenwinkel herangezogen werden.

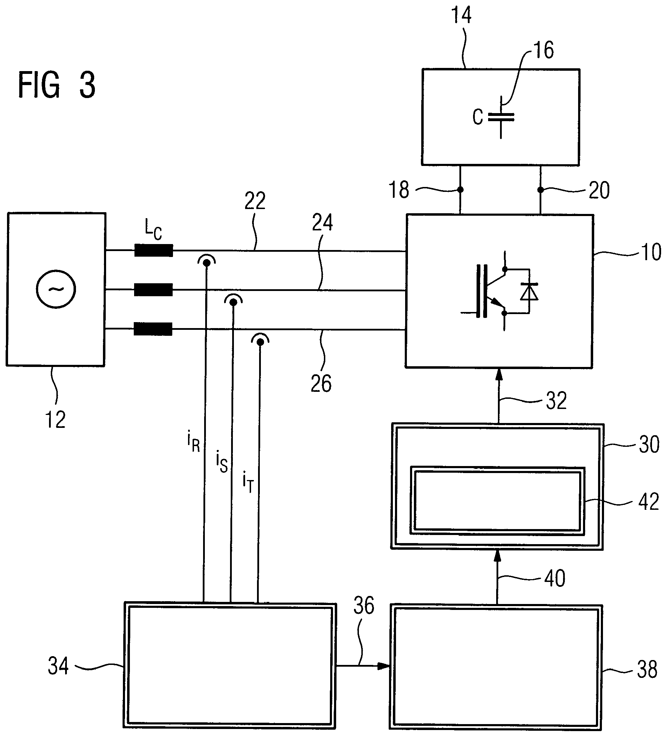

FIG 3 zeigt dazu ein schematisch vereinfachtes Blockschaltbild eines gemäß der Erfindung ausgestalteten Stromrichtergeräts für eine modellgestützte Bestimmung des Netzphasenwinkels. Dieses zeigt, vergleiche auch FIG 1, das Netz 12, die Kommutierungsdrosseln $L_C$, den Stromrichter 10 und den Zwischenkreis 14 mit der Zwischenkreiskapazität 16, sowie den zwischen Netz 12 und Zwischenkreis 14 angeordneten Stromrichter 10.

Zusätzlich sind im Folgenden zur Unterscheidung als Aktivierungsmittel 30 bezeichnete Mittel einerseits zur Aktivierung der Halbleiterschalter T1-T6 entsprechend dem grundfrequenten Betrieb, also zu den natürlichen Zündzeitpunkten, und andererseits zur gleichzeitigen Aktivierung zweier oberer oder unterer Halbleiterschalter T1-T3; T5-T6 des Stromrichters 10 vorgesehen. Die Aktivierung der Halbleiterschalter T1-T3; T5-T6 erfolgt dabei durch Aktivierungssignale 32. Die gleichzeitige Aktivierung erfolgt während einer vorgegebenen oder vorgebbaren Zeitspanne vor und/oder nach sich aufgrund eines Netzwinkels ergebender natürlicher Zündzeitpunkte der Halbleiterschalter T1-T6 im grundfrequenten Betrieb.

Des Weiteren sind im Folgenden zur Unterscheidung als Messmittel 34 bezeichnete Mittel zur Durchführung zweier Messungen während der gleichzeitigen Aktivität zweier oberer oder unterer Halbleiterschalter T1-T3; T5-6 vorgesehen. Das oder die Messmittel 34 übernehmen die Messung der Phasenströme $i_R$, $i_S$, $i_T$ und auf dieser Basis eine modellgestützte Bewertung von Änderungen der gemessenen Ströme zum Zeitpunkt geeigneter Schaltsignale. Das oder die Messmittel 34 liefern als Ausgang einen Schätzfehler 36, der einem Frequenzschätzer (Modell) 38 als Mittel zur Ableitung einer Nachführung eines geschätzten Netzwinkels 40 zugeführt wird. Die Nachführung erfolgt anhand der durch das oder die Messmittel 34 bewirkten Messungen und der auf diese Weise nachgeführte, also ggf. korrigierte, geschätzte Netzwinkel 40 wird zur Taktung der Halbleiterschalter T1-T6 verwendet und zu diesem Zweck dem Aktivierungsmittel 30 und dort einem Anpassungsmittel 42 zur Nachführung eines bisherigen geschätzten Netzwinkels zur Ansteuerung der Halbleiterschalter T1-T6 verwendet. Der Schätzfehler 36 dient also als Eingangssignal für den als Modell fungierenden Frequenzschätzer 38 (vorzugsweise als PLL implementiert) und ein von dem Frequenzschätzer 38 erzeugtes Ausgangssignal wird als geschätzter Netzwinkel 40 zur Nachführung von Netzfrequenz und Phasenwinkel (Netzphasenlage) verwendet. Messmittel 34, Modell 38 und Aktivierungsmittel 30 sind bevorzugt in Software und/oder Firmware implementiert. Als Messmittel 34, Modell 38 und Aktivierungsmittel 30 kommt entsprechend auch ein Prozessor, ASIC, FPGA oder dergleichen (nicht separat dargestellt) in Betracht, die eine solche Soft- oder Firmware ausführen.

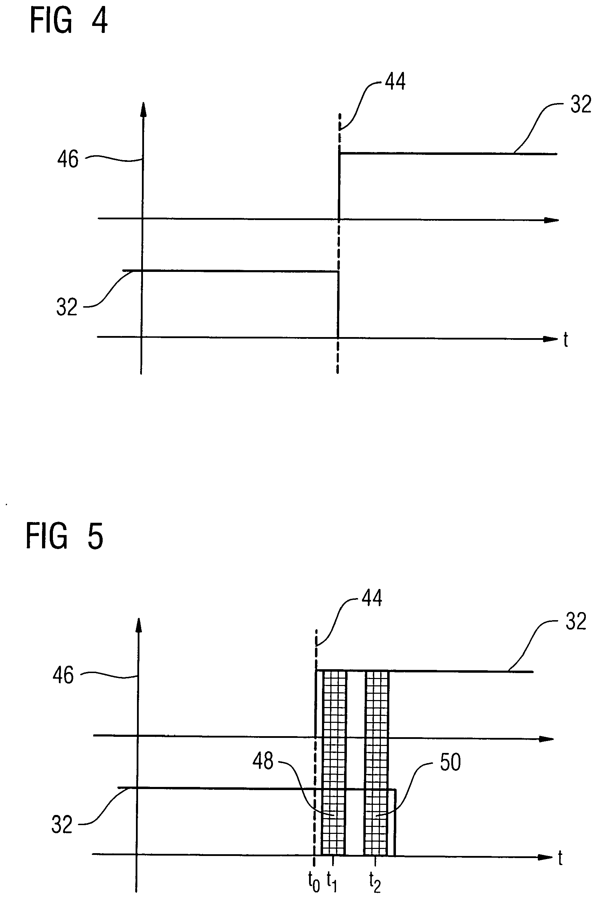

Anhand eines Beispiels wird nachfolgend der oben skizzierte Ansatz gemäß der Erfindung näher erläutert: Das Verfahren sei zunächst am Beispiel des Kommutierungsvorgangs beim Übergang von der Aktivierung zunächst des als T1 bezeichneten Halbleiterschalters zur Aktivierung des als T2 bezeichneten Halbleiterschalters (T1→T2; entsprechend der Sektorgrenze bei 60° in FIG 2) im oberen Brückenzweig erläutert. Der Halbleiterschalter T6 im unteren Zweig bleibt in dieser Zeitspanne dauerhaft eingeschaltet. Die "normalen" Ansteuersignale 32 (FIG 3) entsprechend der grundfrequenten Taktung sind in FIG 4 dargestellt, wobei über der Zeit t die Ansteuersignale 32 zur Ansteuerung zweier Halbleiterschalter gezeigt sind, und zwar in einer oberen Darstellung für einen einzuschaltenden Halbleiterschalter und in einer unteren Darstellung für einen auszuschaltenden Halbleiterschalter. Die Umschaltung erfolgt an der durch eine vertikale Linie verdeutlichten Sektorgrenze 44. Über einer Ordinate 46 ist dabei das jeweilige Signal zur Gateansteuerung abgetragen. Die Darstellung in FIG 4 zeigt die Situation, dass z.B. bei einem Netzwinkel von 60°, also beim Übergang vom Sektor I zum Sektor II (vgl. FIG 2), die als T1 und T2 bezeichneten Halbleiterschalter zur gleichen Zeit aus- bzw. eingeschaltet werden.

Im Unterschied dazu zeigt FIG 5 eine Momentaufnahme bei der Ansteuerung zweier Halbleiterschalter T1-T6 gemäß dem Ansatz der Erfindung. Zwei gemäß der natürlichen Zündzeitpunkte ein- und auszuschaltenden Halbleiterschalter T1-T6 sind zumindest für eine kurze Zeitspanne gleichzeitig aktiv und zwar im dargestellten Fall ab der für einen Zeitpunkt $t_0$ angenommenen Sektorgrenze 44. Während dieser im Folgenden auch als Überlappung oder Überlappungsphase bezeichneten gleichzeitigen Aktivität werden zwei Messungen durchgeführt, deren Ergebnis zur Nachführung des geschätzten Netzwinkels 40 (FIG 3) zur Taktung der Halbleiterschalter T1-T6 verwendet wird. Eine erste, durch einen schraffierten Bereich dargestellte Messung 48 findet dabei zu einem Zeitpunkt $t_1$ während der Überlappung und eine zweite Messung 50 findet zu einem Zeitpunkt $t_2$ während der Überlappung statt. Bei den Messungen 48, 50 handelt es sich bevorzugt um Messungen der Ströme der durch die Aktivierung der jeweiligen Halbleiterschalter T1-T6 betroffenen Netzphasen, im Beispiel also $i_R$ und $i_S$ für die mit T1 und T2 bezeichneten, an der dargestellten Sektorgrenze 44 ein- bzw. auszuschaltenden Halbleiterschalter. Da während der Überlappungsphase zwei obere Halbleiterschalter T1-T6 gleichzeitig aktiv sind und in Verbindung mit den antiparallelen Dioden D1-D6 der Strom in beide Richtungen fließen kann, darf für die Messzeitpunkte $t_1$ und $t_2$ folgende Maschengleichung aufgestellt werden

$$\frac{d\left(L_{C1}(i_R)\cdot i_R(t)\right)}{dt} - \frac{d\left(L_{C2}(i_S)\cdot i_S(t)\right)}{dt} - u_{RS}(t) = 0 \, , \qquad [1]$$

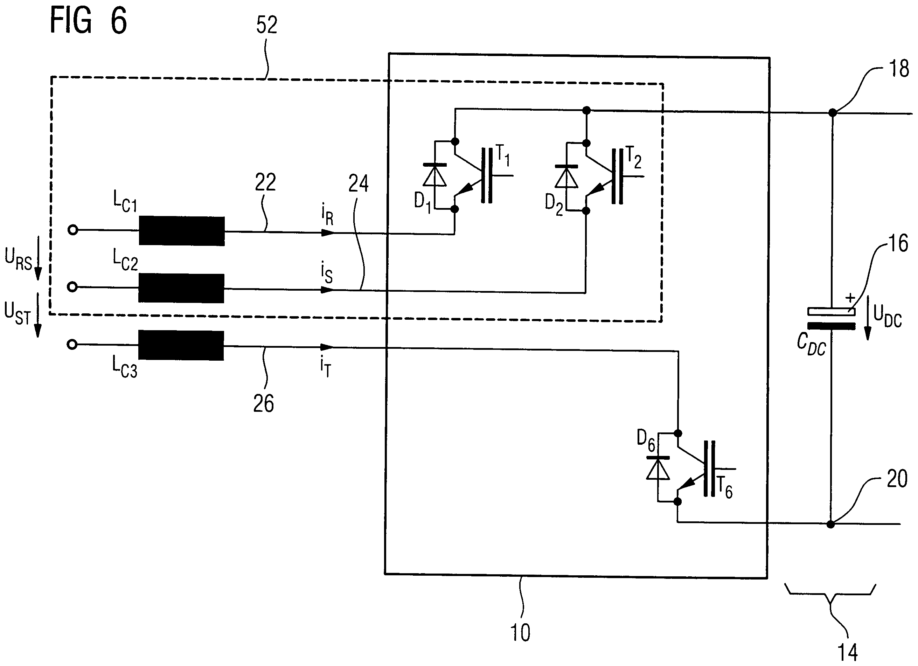

für die in FIG 6 das sich bei gleichzeitiger Aktivierung zweier oberer Halbleiterschalter T1-T6, nämlich der Transistoren T1 und T2, und der Aktivierung mindestens eines unteren Halbleiterschalters T1-T6, nämlich des Transistors T6, ergebende Ersatzschaltbild unter Weglassung aller Schaltelemente in nicht aktiven Pfaden gezeigt ist. Aufgrund der gleichzeitigen Aktivierung zweier Halbleiterschalter T1-T6, hier zweier oberer Halbleiterschalter T1-T3, ergibt sich eine Masche 52. In Bezug auf die jeweilige Masche 52 werden die oben skizzierten und nachfolgend weiter erläuterten Messungen durchgeführt.

Die Spannungsabfälle an den Halbleiterschaltern T1-T6 sowie andere parasitäre Effekte wurden bei Gleichung 1 näherungsweise vernachlässigt, ebenso die Spannungsabfälle an der Netzinduktivität $L_{Netz}$ (vgl. FIG 1). Näherungsweise kann die Netzinduktivität der Kommutierungsinduktivität $L_C$ zugeschlagen werden. Sättigungseffekte der Kommutierungsdrossel in Abhängigkeit des Stroms müssen gegebenenfalls berücksichtigt werden.

Liegen die Messzeitpunkte $t_1$ und $t_2$ genügend nahe zusammen, so darf mit ausreichender Genauigkeit angesetzt werden

$$L_{C1}\frac{\Delta i_R}{\Delta t_{21}} - L_{C2}\frac{\Delta i_S}{\Delta t_{21}} - u_{RS}(t_{12}) = 0$$

mit $\Delta i_{R/S} = i_{R/S}(t_2) - i_{R/S}(t_1)$ und $\quad t_{12} = \dfrac{t_1 + t_2}{2}, \quad \Delta t_{21} = t_2 - t_1$

Zugunsten einer einfachen Darstellung wurden Sättigungseffekte der Drossel dabei vernachlässigt ($L_C = const.$). Der Scheitelwert der verketteten Netzspannung ist anhand der mittleren Zwischenkreisspannung näherungsweise bekannt: $\hat{u}_{RS} = \bar{u}_{DC}$. Damit erhält man einen Schätzwert für die Anschlussspannung zum Zeitpunkt $t_{12}$ als

$$u_{RS,Soll}(t_{12}) = -\hat{u}_{RS}\,\sin\left(2\pi\,f_{PLL}\,t_{12}\right) \, ,$$

wobei der aktuelle Schätzwert für die Netzfrequenz $f_{PLL}$ aus der Netz-PLL zugrunde gelegt wird. Für die Abweichung $y_{RS}$ vom Spannungsschätzwert gilt dann

$$y_{RS} = L_{C1}\frac{\Delta i_R}{\Delta t_{21}} - L_{C2}\frac{\Delta i_S}{\Delta t_{21}} - u_{RS,Soll}(t_{12}) \, . \qquad [2]$$

Diese Abweichung kann positiv oder negativ sein und ist ein Maß dafür, ob der Einschaltvorgang das Transistors T2 im Vergleich zur tatsächlichen Sektorgrenze (bzw. im Vergleich zum realen Netzwinkel) zu früh oder zu spät lag. Dementsprechend kann dieses Signal als Eingangswert einer PLL genutzt werden, um den Schätzwert für die Netzfrequenz zu erhöhen oder zu erniedrigen.

Im Bereich einer Sektorgrenze ist diejenige Leiter-Leiter-Spannung klein, zwischen deren Phasen umgeschaltet werden soll. Die Spannung der jeweiligen dritten Phasen ist dann im Bereich ihres Maximums und ändert sich nur relativ langsam. Im konkreten Beispiel wirkt damit die Spannung $u_T$ über den Strompfad des eingeschalteten unteren Halbleiterschalter, hier des Transistors T6, und des Zwischenkreiskondensators 16 annähernd symmetrisch auf die Phasen R und S. Für die Ermittlung der Phasenlage ist daher näherungsweise die alleinige Betrachtung der kurzgeschlossenen Masche 52 über $u_{RS}$ ausreichend (Gleichung 1).

Die Bedeutung von $y_{RS}$ als Fehlermaß für die Netzsynchronisation kann besonders leicht für den Fall veranschaulicht werden, in dem die tatsächliche Sektorgrenze und die Mitte der Messintervalle $t_{12}$ zusammenfallen, also $u_{RS,Soll}(t_{12})= 0$ bzw. $u_{R,Soll}=u_{S,Soll}$ und damit

$$y_{RS}\big|_{t_{12}=t_0} = L_{C1} \frac{\Delta i_R}{\Delta t_{21}} - L_{C2} \frac{\Delta i_S}{\Delta t_{21}} \qquad [3]$$

gilt.

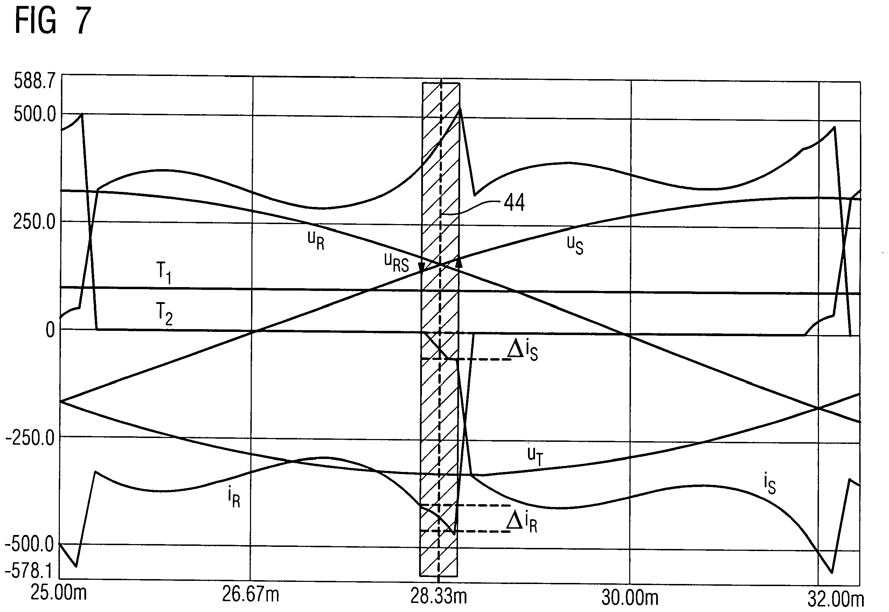

In FIG 7 ist der Fall einer exakten Netzsynchronisation dargestellt. Gezeigt sind die Strom- und Spannungsverläufe am Beispiel einer exakt synchronisierten Umschaltung von einem ersten oberen Halbleiterschalter auf einen zweiten oberen Halbleiterschalter, hier vom Transistor T1 auf den Transistor T2, symmetrisch zur markierten Sektorgrenze 44 bei $u_R=u_S$ mit einer Überlappung der Einschaltzeiten im schraffierten Bereich. Die Netzspannung $u_{RS}$ in der betrachteten Masche 52 ist für die erste und zweite Strommessung 48, 50 betragsmäßig gleich, aufgrund der unterschiedlichen Vorzeichen heben sich die Wirkungen auf die Ströme $i_R,i_S$ gerade auf. Die Ströme steigen aufgrund der zuvor genannten Wirkung der Spannungsquelle in Phase T an, aufgrund der Symmetrie aber betragsmäßig näherungsweise um den gleichen Wert $\Delta i_R = \Delta i_S$. Für den häufigen Fall $L_{C1} = L_{C2}$ ergibt sich damit aus Gleichung 3 $y_{RS} = 0$, d. h., der Schätzwert des Netzwinkels stimmt mit dem realen Wert überein.

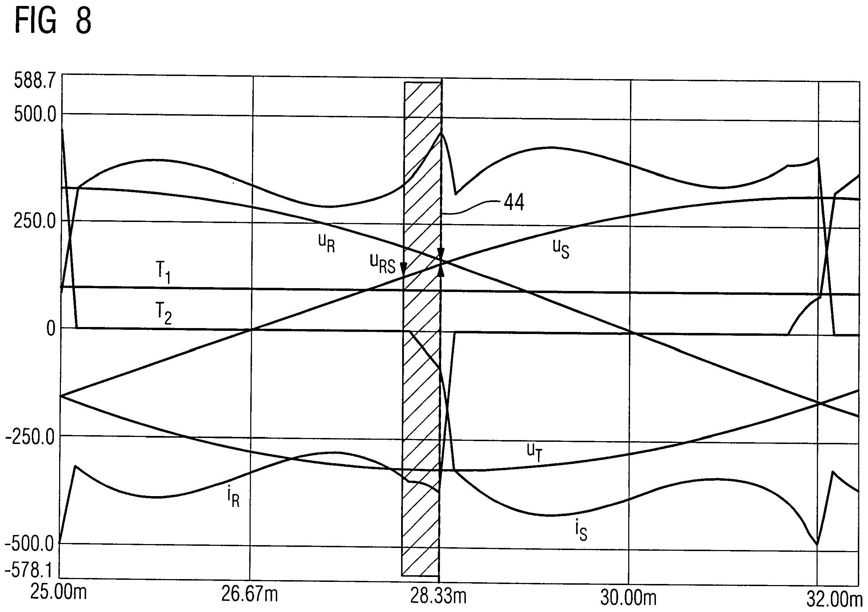

FIG 8 zeigt beispielhaft den Fall einer zu früh liegenden Kommutierung von einem ersten oberen Halbleiterschalter auf einen zweiten oberen Halbleiterschalter, hier vom Transistor T1 auf den Transistor T2, wie er für eine zu hoch geschätzte Netzfrequenz auftreten würde. Gezeigt sind die Strom- und Spannungsverläufe am Beispiel einer - bezogen auf die markierte Sektorgrenze 44 - zu früh liegenden Umschaltung mit einer Überlappung der Einschaltzeiten im schraffierten Bereich. Der wirksame Netzspannungsbetrag $u_{RS}$ zu den beiden Messzeitpunkten ist nicht mehr betragsgleich und führt zu unterschiedlichen Stromänderungen von $i_R$ und $i_S$. Es resultiert ein $y_{RS}<0$ als Kennzeichen einer zu hoch geschätzten Netzfrequenz bei einem Transistor der oberen Brückenhälfte. Für die untere Brückenhälfte ist die Bedeutung der Fehlerspannung invertiert und es resultiert folgende Wertetabelle:

| Fehlerwert | Transistor-Umschaltung in oberer Brückenhälfte | Transistor-Umschaltung in unterer Brückenhälfte |
|---|---|---|
| $y < 0$ | Frequenz-Schätzwert zu hoch Korrekturwert: $+ y$ | Frequenz-Schätzwert zu klein Korrekturwert: $- y$ |
| $y > 0$ | Frequenz-Schätzwert zu klein Korrekturwert: $- y$ | Frequenz-Schätzwert zu hoch Korrekturwert: $+ y$ |

Die Fehlerspannungen $y$ werden bei jedem Sektorwechsel und damit sechsmal pro Netzperiode ermittelt. Um eine stabile und robuste Schätzung von Netzfrequenz und Winkel mit Hilfe einer PLL zu erreichen, können die Fehlerwerte noch gefiltert werden. Sinnvoll kann es auch sein ein Toleranzband zulässiger Fehlerwerte festzulegen, um Modellungenauigkeiten zu kompensieren. In einer bevorzugten Ausprägung kann auch lediglich die Vorzeicheninformation des Fehlerspannung $signum(y)$ als Eingangswert eines diskreten Frequenzschätzers 38 (FIG 3) dienen. Der Frequenzschätzwert im Frequenzschätzer 38 würde dementsprechend stufenweise erhöht oder verringert werden und für die Umschaltung an der nächsten Sektorgrenze verwendet werden.

Das Verfahren kann unterschiedlich ausgestaltet sein. Kennzeichnend für die teilweise untereinander auch kombinierbaren Ausgestaltungen sind folgende Verfahrensschritte:

Erste Ausgestaltung

Die normale Ansteuerung der Halbleiterschalter T1-T6 für die grundfrequente Taktung (FIG 2) wird so erweitert, dass zeitweise mindestens zwei Schalter einer Halbbrücke, also zwei obere oder untere Halbleiterschalter T1-T3; T5-T6, gleichzeitig aktiviert, also geschlossen sind. Während einer sich aufgrund der gleichzeitigen Aktivierung ergebenden Überlappungsphase werden Stromänderungen in den betroffenen Netzphasen gemessen, z.B. durch mindestens zwei aufeinander folgende Strommessungen. Durch Auswertung der Maschengleichungen (Spannungsabfälle an den maßgeblichen Induktivitäten) in den betroffenen Phasen wird ein Maß berechnet, das ein Gütekriterium für die gewünschte Lage der Schalthandlung in Bezug auf den aktuellen tatsächlichen Netzphasenwinkel angibt. Das Gütemaß dient als Eingangssignal oder Korrekturwert für einen Frequenzschätzer 38 für Netzfrequenz / Netzwinkel (vorzugsweise eine PLL). Der vom Frequenzschätzer 38 berechnete Netzwinkel 40 wird für die Erzeugung der Aktivierungssignale 32 und für die Erzeugung der genannten Ergänzungssignale (gleichzeitiges Schließen mehrerer Schalter einer Halbbrücke) verwendet. Durch den geschlossenen Regelkreis für die modellgestützte Nachführung des Netzwinkels 40 kann auf Messerfassungen (A/D-Wandler, Komparatoren, etc) für die direkte Bestimmung der Netzspannung oder der Vorzeichenwechsel der Netzspannungen verzichtet werden.

Zweite Ausgestaltung

Die Änderungen gegenüber den normalen grundfrequenten Aktivierungssignalen 32 - im Weiteren als Testsignale bezeichnet

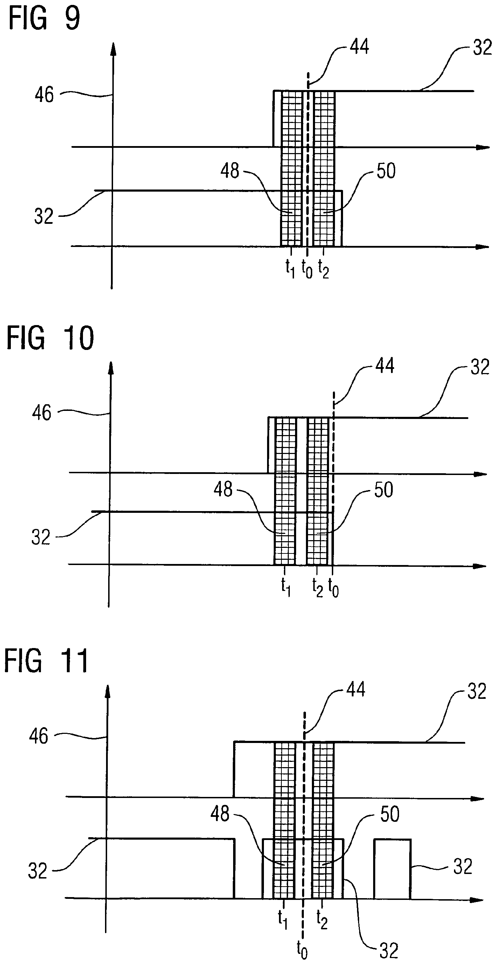

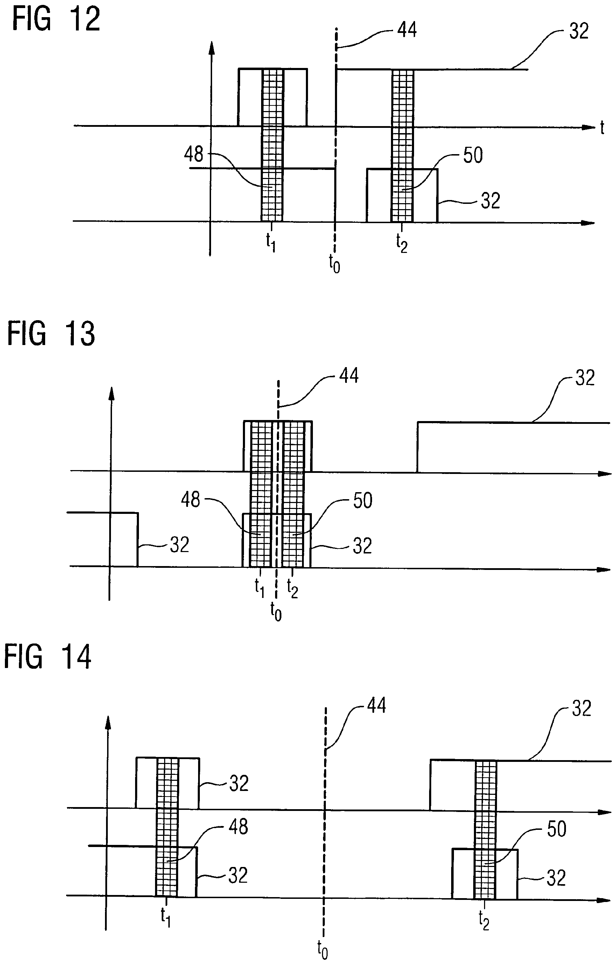

- werden wie folgt ausgeführt:
- Die Testsignale werden so kurz wie möglich gewählt, um eine zuverlässige Messung der Stromänderungen zu erlauben (z.B. 100μs).
- Die Testsignale werden die den Bereich der Sektorgrenzen 44 oder in den Bereich der Nulldurchgänge der verketteten Leiterspannungen gelegt und in einem Dreiphasensystem damit sechsmal pro Netzperiode ausgeführt.
- Bevorzugt werden diejenigen beiden unteren oder oberen Halbleiterschalter T1-T3; T4-T6 für das Testsignal gleichzeitig angesteuert, die an der Stromkommutierung im Bereich der jeweiligen Sektorgrenze 44 beteiligt sind (FIG 4). Dann ergibt sich die geringste Auswirkung der Testsignale auf den regulären Betrieb (Netzrückwirkungen, Stromoberschwingungen, Leistungsreduzierung) und die Auswertung ist aufgrund zulässiger Vereinfachungen am einfachsten und am genauesten (kleiner Einfluss der Modellparameter Netzspannung und Induktivität, so dass Parameterungenauigkeiten nicht zu großen Schätz-fehlern führen).
- Symmetrische Lage des Testsignals bezüglich der Sektorgrenzen 44 wie in FIG 9 dargestellt. Dies ist eine bevorzugte Ausprägung zum Erreichen geringer Empfindlichkeit gegenüber Parameterschwankungen.
- Testsignal vor Sektorgrenze wie in FIG 10 dargestellt. Dies ist eine bevorzugte Ausprägung zum Erreichen einer exakten Kommutierung an der Sektorgrenze 44.
- Testsignal mit ggf. mehrfacher Unterbrechung des Ansteuerblocks wie in FIG 11 dargestellt. Dies ist eine bevorzugte Ausprägung, mit der Testsignale so gewählt werden können, dass eine Reduzierung der Netzrückwirkungen durch hohe Stromsteilheiten im generatorischen Betriebsfall erreicht wird
- Testsignal für zeitlich weiter auseinanderliegende Messzeitpunkte wie in FIG 12 dargestellt. Dies ist eine bevorzugte Ausprägung zur Verbesserung der Genauigkeit der Stromdifferenzmessung.
- Testsignal für verkleinerte Ansteuersektoren wie in FIG 13 oder FIG 14 dargestellt. Dies ist eine bevorzugte Ausprägung zur Reduzierung einer Blindleistung im Teillastbetrieb und zur Beeinflussung der Rückspeiseleistung.

Dritte Ausgestaltung

Der Gütewert kann quantitativ zur Korrektur des Frequenzschätzwerts 40 in einem Frequenzschätzer 38 verwendet werden. Bevorzugt wird nur das Vorzeichen (signum-Funktion) des Fehlers oder des Korrekturwerts verwendet, um die Frequenzschätzung in festen Schritten diskret zu korrigieren. Bevorzugt wird dabei ein Totband definiert, um eine ständige Frequenzkorrektur bei kleinen Abweichungen von der Phasen-Solllage zu vermeiden (Zweipunkt-Charakteristik mit Totzone).

Vierte Ausgestaltung

Es müssen die Stromänderungen in mindestens zwei Phasen messbar sein (Messeinrichtung nur in zwei Phasen erforderlich). Der Strom der dritten Phase $i_3 = -i_1 - i_2$ ergibt sich aus der Knotenregel unter der Annahme, dass kein oder nur ein geringer Strom über einen vierten Leiter (Nullleiter, Erdverbindung) abfließt.

Fünfte Ausgestaltung

Zur Verbesserung der Modellgenauigkeit bei der Berechnung des Fehlerwerts $y$ kann die Masche 52 über die dritte jeweils am Umschaltvorgang unbeteiligte Phase mit einbezogen werden. Es gilt dann für den Fall der oben aufgeführten Beispielimplementierung

$$\frac{d\left(L_{C2}\left(i_S\right) \cdot i_S(t)\right)}{dt} - \frac{d\left(L_{C3}\left(i_T\right) \cdot i_T(t)\right)}{dt} - u_{ST}(t) + u_{DC}(t) = 0 \qquad [4]$$

Eine weitere Masche über die Netzspannung $u_{TR}$ und die Zwischenkreisspannung ist wegen $u_R + u_S + u_T = 0$ von den beiden Maschengleichungen (Gleichungen 2 und 4) linear abhängig. Wie oben kann mit Hilfe von Gleichung 4 ein Fehlerwert zur Bewertung der tatsächlichen Netzwinkellage berechnet und zur Erhöhung der Modellgenauigkeit verwendet werden (z.B. durch Mittelwertbildung mit dem Gütewert aus der ersten Maschengleichung).

Sechste Ausgestaltung

Werden für die Testsignale alle drei Halbleiterschalter T1-T6 einer Brückenhälfte geschossen, so wird ein so genannter Nullzeiger gestellt. Die zuvor genannte weitere Maschengleichung (Gleichung 4) kann zur Genauigkeitsverbesserung aufgestellt werden, wobei nun die Zwischenkreisspannung $u_{DC}(t)$ entfällt und damit nicht gemessen werden muss. Allerdings sind die Abweichungen von der normalen Stromform und die Netzrückwirkungen aufgrund der kurzzeitigen Kurzschlüsse durch die Nullzeiger größer.

Das bislang beschriebene Verfahren betrachtet die Nachführung des geschätzten Netzwinkels im laufenden Betrieb, d.h., bei bereits laufender Taktung der Halbleiterschalter. Nicht beschrieben wird hier, wie eine Erstsynchronisierung erfolgt, d.h., wie Netzwinkel und Frequenz vor Freigabe der Aktivierungssignale 32 so genau bestimmt werden können, dass Anfangsfehler mit dem vorgeschlagenen Verfahren schrittweise korrigiert werden können. Konventionell erfolgt die Erstsynchronisierung mit Messmitteln, d.h., einer Messung der Leiterspannungsverläufe oder einer zeitlichen Erfassung mehrerer Spannungsnulldurchgänge. Da diese Messmittel hier gerade entfallen sollen, bietet es sich beispielsweise an, kurze Nullzeiger vor Beginn der eigentlichen grundfrequenten Taktung auszugeben. Aus den resultierenden Stromänderungen können die Amplituden der Netzspannungen und deren Phasenwinkel berechnet und als Setzwert für das oben beschriebene Synchronisationsverfahren im Betrieb verwendet werden, so dass bevorzugt eine Kombination einer solchen Erstsynchronisierung mit dem hier beschriebenen Verfahren oder einer seiner Ausgestaltungen oder einer Kombination der Ausgestaltungen vorgeschlagen wird, so dass durch Übernahme der Setzwerte ein nahezu einschwingfreier Übergang in den laufenden Betrieb möglich ist.

Für die Mehrzahl der hier beschriebenen Testsignale, oder eine Auswahl davon, ist vorgesehen, dass diese oder zugrunde liegende Muster in einem Speicher (nicht separat dargestellt) in an sich bekannter Art in einer computerlesbaren Beschreibung vorgehalten werden, so dass jeweils ein Testsignal entsprechend jeweiliger Randbedingungen ausgewählt und zur gleichzeitigen Aktivierung zweier oberer oder unterer Halbleiterschalter T1-T3; T5-T6 verwendet werden kann.

Damit lässt sich die Erfindung kurz wie folgt darstellen: Es wird ein Verfahren zum Betrieb eines grundfrequent getakteten, netzseitigen Stromrichters 10 mit einer mit steuerbaren Halbleiterschaltern T1-T6 bestückten Brückenschaltung, und eine nach dem Verfahren arbeitende Vorrichtung angegeben, wobei eine Anzahl, insbesondere drei, oberer Halbleiterschalter T1-T3 mit einem im Betrieb des Stromrichters 10 auf einem ersten Zwischenkreispotential liegenden ersten Zwischenkreiskontakt 18 und eine Anzahl, insbesondere drei, unterer Halbleiterschalter T4-T6 mit einem im Betrieb des Stromrichters 10 auf einem zweiten Zwischenkreispotential liegenden zweiten Zwischenkreiskontakt 20 verbunden sind, wobei während einer vorgegebenen oder vorgebbaren Zeitspanne vor und/oder nach sich aufgrund eines Netzwinkels ergebender natürlicher Zündzeitpunkte der Halbleiterschalter T1-T6 im grundfrequenten Betrieb zwei obere oder untere Halbleiterschalter T1-T3; T5-T6 gleichzeitig aktiviert sind, bei dem bzw. bei der während der gleichzeitigen Aktivität zweier oberer oder unterer Halbleiterschalter T1-T3; T5-6 zwei Messungen durchgeführt werden, deren Ergebnis zur Nachführung eines geschätzten Netzwinkels zur Taktung der Halbleiterschalter T1-T6 verwendet wird. Mit dem Ansatz gemäß der Erfindung werden bisher erforderlich Messeinrichtungen eingespart oder auf ein minimal erforderliches Maß reduziert.

**Patentansprüche**

1.   Verfahren zum Betrieb eines grundfrequent getakteten, netzseitigen Stromrichters (10) mit einer mit steuerbaren Halbleiterschaltern (T1, T2, T3, T4, T5, T6) bestückten Brückenschaltung, wobei eine Anzahl, insbesondere drei, oberer Halbleiterschalter (T1, T2, T3) mit einem im Betrieb des Stromrichters (10) auf einem ersten Zwischenkreispotential liegenden ersten Zwischenkreiskontakt (18) und eine Anzahl, insbesondere drei, unterer Halbleiterschalter (T4, T5, T6) mit einem im Betrieb des Stromrichters (10) auf einem zweiten Zwischenkreispotential liegenden zweiten Zwischenkreiskontakt (20) verbunden sind,

- wobei während einer vorgegebenen oder vorgebbaren Zeitspanne vor und/oder nach sich aufgrund eines Netzwinkels ergebender natürlicher Zündzeitpunkte der Halbleiterschalter (T1-T6) im grundfrequenten Betrieb zwei obere oder untere Halbleiterschalter (T1-T3; T5-T6) gleichzeitig aktiviert sind,
- wobei während der gleichzeitigen Aktivität zweier oberer oder unterer Halbleiterschalter (T1-T3; T5-6) zwei Phasenstrommessungen durchgeführt werden, deren Ergebnis zur Nachführung eines geschätzten Netzwinkels zur Taktung der Halbleiterschalter (T1-T6) verwendet wird,
- wobei neben den zwei zumindest kurzzeitig gleichzeitig aktivierten oberen Halbleiterschaltern (T1-T3) dauerhaft ein unterer Halbleiterschalter (T4-T6) aktiv ist und wobei neben den zwei zumindest kurzzeitig gleichzeitig aktivierten unteren Halbleiterschaltern (T4-T6) dauerhaft ein oberer Halbleiterschalter (T1-T3) aktiv ist.

**2.** Verfahren nach Anspruch 1, wobei die gleichzeitig aktivierten oberen oder unteren Halbleiterschalter (T1-T3; T5-T6) diejenigen Halbleiterschalter (T1-T6) sind, zwischen denen im grundfrequenten Betrieb eine Umschaltung erfolgt.

**3.** Verfahren nach einem der vorangehenden Ansprüche,

- wobei der Stromrichter (10) an netzseitige Stränge (22, 24, 26) angeschlossen ist und zwar jeder Strang (22, 24, 26) an einen Mittelabgriff zwischen jeweils einem oberen und einem unteren Halbleiterschalter (T1-T6) und
- wobei die Nachführung des geschätzten Netzwinkels in Ansehung einer Gesamtspannung in den über die gleichzeitig aktivierten Halbleiterschalter (T1-T6) verbundenen Strängen (22, 24, 26) erfolgt.

**4.** Verfahren nach Anspruch 3, wobei die Nachführung linear mit einem aus der Gesamtspannung gebildeten Korrekturwert erfolgt.

**5.** Verfahren nach Anspruch 3, wobei die Nachführung in diskreten Schritten anhand eines Vorzeichens der Gesamtspannung erfolgt.

**6.** Stromrichtergerät mit einem grundfrequent getakteten, netzseitigen Stromrichter (10) mit einer mit steuerbaren Halbleiterschaltern (T1, T2, T3, T4, T5, T6) bestückten Brückenschaltung,

- wobei eine Anzahl, insbesondere drei, oberer Halbleiterschalter (T1, T2, T3) mit einem im Betrieb des Stromrichters (10) auf einem ersten Zwischenkreispotential liegenden ersten Zwischenkreiskontakt (18) und eine Anzahl, insbesondere drei, unterer Halbleiterschalter (T4, T5, T6) mit einem im Betrieb des Stromrichters (10) auf einem zweiten Zwischenkreispotential liegenden zweiten Zwischenkreiskontakt (20) verbunden sind, **gekennzeichnet durch**
- ein Mittel (30) zur gleichzeitigen Aktivierung zweier oberer oder unterer Halbleiterschalter (T1-T3; T5-T6) während einer vorgegebenen oder vorgebbaren Zeitspanne vor und/oder nach sich aufgrund eines Netzwinkels ergebender natürlicher Zündzeitpunkte der Halbleiterschalter (T1-T6) im grundfrequenten Betrieb,
- wobei das Mittel (30) zur gleichzeitigen Aktivierung zweier oberer oder unterer Halbleiterschalter neben den zwei zumindest kurzzeitig gleichzeitig aktivierten oberen Halbleiterschaltern (T1-T3) dauerhaft einen unteren Halbleiterschalter (T4-T6) aktiviert und wobei das Mittel (30) zur gleichzeitigen Aktivierung zweier oberer oder unterer Halbleiterschalter neben den zwei zumindest kurzzeitig gleichzeitig aktivierten unteren Halbleiterschaltern (T4-T6) dauerhaft einen oberen Halbleiterschalter (T1-T3) aktiviert,
- ein Mittel (34) zur Durchführung zweier Phasenstrommessungen während der gleichzeitigen Aktivität zweier oberer oder unterer Halbleiterschalter (T1-T3; T5-6) und
- ein Mittel (38) zur Ableitung einer Nachführung eines geschätzten Netzwinkels zur Taktung der Halbleiterschalter (T1-T6) anhand der Messungen.

**7.** Stromrichtergerät nach Anspruch 6,

- wobei der Stromrichter (10) an netzseitige Stränge (22, 24, 26) angeschlossen ist und zwar jeder Strang (22, 24, 26) an einen Mittelabgriff zwischen jeweils einem oberen und einem unteren Halbleiterschalter (T1-T6) und
- wobei die Nachführung des geschätzten Netzwinkels in Ansehung einer Gesamtspannung in den über die gleichzeitig aktivierten Halbleiterschalter (T1-T6) verbundenen Strängen (22, 24, 26) erfolgt.

**8.** Stromrichtergerät nach Anspruch 6 oder 7, wobei für das Mittel (30) zur gleichzeitigen Aktivierung zweier oberer oder unterer Halbleiterschalter (T1-T3; T5-T6) in einem Speicher als Testsignale eine auswählbare Mehrzahl von Mustern zur gleichzeitigen Aktivierung zweier oberer oder unterer Halbleiterschalter (T1-T3; T5-T6) hinterlegt ist.

**9.** Computerprogramm mit durch einen Computer ausführbaren Programmcodeanweisungen, die bewirken, dass das Stromrichtergerät des Anspruchs 6 die Verfahrensschritte nach Anspruch 1 ausführt.

**10.** Speichermedium auf dem das Computerprogramm nach Anspruch 9 gespeichert ist

**11.** Stromrichtergerät nach einem der Ansprüche 6 bis 8, auf dem ein Computerprogramm nach Anspruch 9 geladen ist.

**12.** Stromrichtergerät nach Anspruch 11, mit einer Verarbeitungseinheit als Mittel (30) zur gleichzeitigen Aktivierung zweier oberer oder unterer Halbleiterschalter (T1-T3; T5-T6) und als Mittel (34) zur Durchführung zweier Messungen während der gleichzeitigen Aktivität zweier oberer oder unterer Halbleiterschalter (T1-T3; T5-6) sowie als Mittel (38) zur Ableitung einer Nachführung eines geschätzten Netzwinkels zur Taktung der Halbleiterschalter (T1-T6) anhand der Messungen, die zur Ausführung eines Computerprogramms nach Anspruch 9 vorgesehen ist.

**Claims**

1. Method for operating a fundamental frequency clocked converter (10) on the power supply side comprising a bridge circuit equipped with controllable semiconductor switches (T1, T2, T3, T4, T5, T6), wherein a number, in particular three, of upper semiconductor switches (T1, T2, T3) are connected to a first intermediate circuit contact (18), which is at a first intermediate circuit potential during operation of the converter (10), and a number, in particular three, of lower semiconductor switches (T4, T5, T6) are connected to a second intermediate circuit contact (20), which is at a second intermediate circuit potential during operation of the converter (10),

   - wherein, during a predetermined or predeterminable time period before and/or after natural triggering instants - arising on account of a power supply angle - of the semiconductor switches (T1-T6) in fundamental frequency operation, two upper or lower semiconductor switches (T1-T3; T5-T6) are activated simultaneously,
   - wherein, during the simultaneous activity of two upper or lower semiconductor switches (T1-T3; T5-T6), two phase current measurements are carried out, the result of which is used for tracking an estimated power supply angle for the clocking of the semiconductor switches (T1-T6),
   - wherein one lower semiconductor switch (T4-T6) is permanently active alongside the two upper semiconductor switches (T1-T3) that are at least momentarily activated simultaneously, and wherein one upper semiconductor switch (T1-T3) is permanently active alongside the two lower semiconductor switches (T4-T6) that are at least momentarily activated simultaneously.

2. Method according to Claim 1, wherein the simultaneously activated upper or lower semiconductor switches (T1-T3; T5-T6) are those semiconductor switches (T1-T6) between which a changeover is effected during fundamental frequency operation.

3. Method according to either of the preceding claims,

   - wherein the converter (10) is connected to phase sections (22, 24, 26) on the power supply side, to be precise each phase section (22, 24, 26) is connected to a center tap between in each case an upper and a lower semiconductor switch (T1-T6), and
   - wherein the tracking of the estimated power supply angle is effected in view of a total voltage in the phase sections (22, 24, 26) connected via the simultaneously activated semiconductor switches (T1-T6).

4. Method according to Claim 3, wherein the tracking is effected linearly with a correction value formed from the total voltage.

5. Method according to Claim 3, wherein the tracking is effected in discrete steps on the basis of a sign of the total voltage.

6. Converter device comprising a fundamental frequency clocked converter (10) on the power supply side comprising a bridge circuit equipped with controllable semiconductor switches (T1, T2, T3, T4, T5, T6),

   - wherein a number, in particular three, of upper semiconductor switches (T1, T2, T3) are connected to a first intermediate circuit contact (18), which is at a first intermediate circuit potential during operation of the converter (10), and a number, in particular three, of lower semiconductor switches (T4, T5, T6) are connected to a second intermediate circuit contact (20), which is at a second intermediate circuit potential during operation of the converter (10), **characterized by**
   - a means (30) for simultaneously activating two upper or lower semiconductor switches (T1-T3; T5-T6) during a predetermined or predeterminable time period before and/or after natural triggering instants - arising on account of a power supply angle - of the semiconductor switches (T1-T6) during fundamental frequency operation,
   - wherein the means (30) for simultaneously activating two upper or lower semiconductor switches permanently activates a lower semiconductor switch (T4-T6) alongside the two at least momentarily simultaneously activated upper semiconductor switches (T1-T3), and wherein the means (30) for simultaneously activating two upper or lower semiconductor switches permanently activates an upper semiconductor switch (T1-T3) alongside the two at least momentarily simultaneously activated lower semiconductor switches (T4-T6),

- a means (34) for carrying out two phase current measurements during the simultaneous activity of two upper or lower semiconductor switches (T1-T3; T5-T6), and
- a means (38) for deriving a tracking of an estimated power supply angle for the clocking of the semiconductor switches (T1-T6) on the basis of the measurements.

**7.** Converter device according to Claim 6,

- wherein the converter (10) is connected to phase sections (22, 24, 26) on the power supply side, to be precise each phase section (22, 24, 26) is connected to a center tap between in each case an upper and a lower semiconductor switch (T1-T6), and
- wherein the tracking of the estimated power supply angle is effected in view of a total voltage in the phase sections (22, 24, 26) connected via the simultaneously activated semiconductor switches (T1-T6).

**8.** Converter device according to Claim 6 or 7, wherein a selectable plurality of patterns for simultaneously activating two upper or lower semiconductor switches (T1-T3; T5-T6) are stored as test signals in a memory for the means (30) for simultaneously activating two upper or lower semiconductor switches (T1-T3; T5-T6).

**9.** Computer program comprising program code instructions executable by a computer which cause the converter device of Claim 6 to carry out the method steps according to Claim 1.

**10.** Storage medium on which the computer program according to Claim 9 is stored.

**11.** Converter device according to any of Claims 6 to 8, on which a computer program according to Claim 9 is loaded.

**12.** Converter device according to Claim 11, comprising a processing unit as means (30) for simultaneously activating two upper or lower semiconductor switches (T1-T3; T5-T6), and as means (34) for carrying out two measurements during the simultaneous activity of two upper or lower semiconductor switches (T1-T3; T5-T6) and also as means (38) for deriving a tracking of an estimated power supply angle for the clocking of the semiconductor switches (T1-T6) on the basis of the measurements, which is provided for executing a computer program according to Claim 9.

**Revendications**

**1.** Procédé pour faire fonctionner un convertisseur (10) du côté du réseau, cadencé à une fréquence de base et ayant un circuit en pont pourvu d'interrupteurs (T1, T2, T3, T4, T5, T6) à semi-conducteur pouvant être commandés, un nombre, notamment trois, d'interrupteurs (T1, T2, T3) à semi-conducteur supérieurs étant reliés à un premier contact (18) de circuit intermédiaire se trouvant, lorsque le convertisseur (10) est en fonctionnement, à un premier potentiel de circuit intermédiaire et un nombre, notamment trois, d'interrupteurs (T4, T5, T6) à semi-conducteur inférieurs étant reliés à un deuxième contact (20) de circuit intermédiaire se trouvant, lorsque le convertisseur (10) est en fonctionnement, à un deuxième potentiel de circuit intermédiaire,

- dans lequel, pendant un laps de temps donné à l'avance ou pouvant l'être, avant et/ou après des instants d'amorçage naturels? résultant d'un angle du réseau, des interrupteurs (T1 à T6) à semi-conducteur en fonctionnement à la fréquence de base, deux interrupteurs (T1 à T3; T5 à T6) à semi-conducteur supérieurs ou inférieurs sont activés en même temps,
- dans lequel, pendant l'activité simultanée de deux interrupteurs (T1 à T3; T5 à T6) à semi-conducteur supérieurs ou inférieurs, on effectue deux mesures de courant de phase, dont on utilise le résultat pour suivre un angle du réseau estimé pour le cadencement des interrupteurs (T1 à T6) à semi-conducteur,
- dans lequel, outre les deux interrupteurs (T1 à T3) à semi-conducteur supérieurs activés en même temps au moins brièvement, un interrupteur (T4 à t6) à semi-conducteur inférieur est actif en permanence et dans lequel, outre les deux interrupteurs (T4 à T6) à semi conducteur inférieurs activés en même temps au moins brièvement, un interrupteur (T1 à T3) à semi-conducteur supérieur est actif en permanence.

**2.** Procédé suivant la revendication 1, dans lequel les interrupteurs (T1 à T3; T5 à T6) à semi conducteur supérieurs ou inférieurs activés en même temps sont les interrupteurs (T1 à T6) à semi-conducteur entre lesquels se produit une commutation dans le fonctionnement à la fréquence de base.

**3.** Procédé suivant l'une des revendications précédentes,

- dans lequel le convertisseur (10) est raccordé à des branches (22, 24, 26) du côté du réseau et, de fait, chaque branche (22, 24, 26) a une prise médiane entre, respectivement, un interrupteur (T1 à T3) à semi-conducteur supérieur et un interrupteur (T4 à T6) à semi-conducteur inférieur et

- dans lequel le suivi de l'angle du réseau estimé s'effectue en considération d'une tension totale dans les branches (22, 24, 26) reliées par les interrupteurs (T1 à T6) à semi-conducteur activés simultanément.

4. Procédé suivant la revendication (3), dans lequel le suivi s'effectue linéairement par une valeur de correction formée à partir de la tension totale.

5. Procédé suivant la revendication 3, dans lequel le suivi s'effectue en pas discrets à l'aide du signe de la tension totale.

6. Appareil de convertisseur, comprenant un convertisseur (10) du côté du réseau, cadencé à la fréquence de base et ayant un circuit en pont pourvu d'interrupteurs (T1, T2, T3, T4, T5, T6) à semi-conducteur pouvant être commandés,

- dans lequel un nombre, notamment trois, d'interrupteurs (T1, T2, T3) à semi-conducteur supérieurs sont reliés à un premier contact (18) de circuit intermédiaire se trouvant, lorsque le convertisseur (10) est en fonctionnement, à un premier potentiel de circuit intermédiaire et un nombre, notamment trois, d'interrupteurs (T4, T5, T6) à semi-conducteur inférieurs sont reliés à un deuxième contact (20) de circuit intermédiaire se trouvant, lorsque le convertisseur (10) est en fonctionnement, à un deuxième potentiel de circuit intermédiaire, **caractérisé par**

- un moyen (30) d'activation simultanée de deux interrupteurs (T1 à T3; T5 à T6) à semi-conducteur supérieurs ou inférieurs pendant un laps de temps donné à l'avance, ou pouvant l'être, avant et/ou après des instants d'amorçage naturels, résultant d'un angle du réseau, des interrupteurs (T1 à T6) à semi-conducteur en fonctionnement à la fréquence de base,

- dans lequel le moyen (30) active, pour l'activation simultanée de deux interrupteurs à semi conducteur supérieurs et inférieurs, outre les deux interrupteurs (T1 à T3) à semi-conducteur supérieurs activés simultanément au moins brièvement, en permanence un interrupteur (T4 à T6) à semi-conducteur inférieur, et dans lequel le moyen (30) d'activation simultanée de deux interrupteurs à semi-conducteur supérieurs ou inférieurs active, outre les interrupteurs (T4 à T6) à semi-conducteur inférieurs activés simultanément au moins brièvement, en permanence un interrupteur (T1 à T3) à semi-conducteur supérieur,

- un moyen (34) pour effectuer deux mesures de courant de phase pendant l'activité simultanée de deux interrupteurs (T1 à T3; T5 à T6) à semi-conducteur supérieurs ou inférieurs et

- un moyen (38) de déduction d'un suivi d'un angle du réseau estimé pour cadencer les interrupteurs (T1 à T6) à semi-conducteur à l'aide des mesures.

7. Appareil de convertisseur suivant la revendication 6,

- dans lequel le convertisseur (10) est raccordé à des branches (22, 24, 26) du côté du réseau et, de fait, chaque branche (22, 24, 26) a une prise médiane entre, respectivement, un interrupteur (T1 à T3) à semi-conducteur supérieur et un interrupteur (T4 à T6) à semi-conducteur inférieur et

- dans lequel le suivi de l'angle du réseau estimé s'effectue en considération d'une tension totale dans les branches (22, 24, 26) reliées par les interrupteurs (T1 à T6) à semi-conducteur activés simultanément.

8. Appareil de convertisseur suivant la revendication 6 ou 7, dans lequel, pour le moyen (30) d'activation simultanée de deux interrupteurs (T1 à T3; T5 à T6) à semi-conducteur supérieurs ou inférieurs, il est mémorisé dans une mémoire, comme signaux de test, une pluralité pouvant être sélectionnée de motifs d'activation simultanée de deux interrupteurs (T1 à T3; T5 à T6) à semi-conducteur supérieurs ou inférieurs.

9. Programme d'ordinateur ayant des instructions de code de programme pouvant être exécutées sur un ordinateur et faisant que l'appareil de convertisseur de la revendication 6 exécute les stades du procédé suivant la revendication 1.

10. Support de mémoire sur lequel est mémorisé le programme d'ordinateur suivant la revendication 9.

11. Appareil de convertisseur suivant l'une des revendications 6 à 8, sur lequel est chargé un programme d'ordinateur suivant la revendication 9.

12. Appareil de convertisseur suivant la revendication 11, comprenant une unité de traitement comme moyen (30) d'activation simultanée de deux interrupteurs (T1 à T3; T5 à T6) à semi-conducteur supérieurs ou inférieurs et comme moyen (34) pour effectuer deux mesures pendant l'activité simultanée de deux interrupteurs (T1 à T3; T5 à T6) à semi-conducteur supérieurs ou inférieurs, ainsi que comme moyen (38) de déduction d'un suivi d'un angle du réseau estimé pour cadencer les interrupteurs (T1 à T6) à semi-conducteur à l'aide des mesures, qui est prévu pour exécuter un programme d'ordinateur suivant la revendication 9.

FIG 1

FIG 2

FIG 3

FIG 4

FIG 5

FIG 6

# FIG 7

EP 2 144 360 B1

FIG 8

## FIG 9

## FIG 10

## FIG 11

FIG 12

FIG 13

FIG 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005012150 A1
- DE 102006015031 A1

- DE 2005E18911

**In der Beschreibung aufgeführte Nicht-Patentliteratur**

- A simple indirect voltage sensing method for lineconnected inverters. **FRANK BECKER et al.** European Conference on Power Electronics and Applications in Aalborg. IEEE SERVICE CENTER, 02. September 2007, 1-7